# EUROPÄISCHE PATENTSCHRIFT

(11) **EP 0 393 563 B1**
(45) Veröffentlichungstag und Bekanntmachung des Hinweises auf die Patenterteilung: **29.06.1994**
(21) Anmeldenummer: 90107214.0
(22) Anmeldetag: 14.04.1990
(51) Int. Cl.: G11B 5/706

(54) **Nadelförmige, kobaltmodifizierte Eisenoxide und Verfahren zu ihrer Herstellung**
Acicular cobalt-modified iron oxide and process for its manufacture
Oxyde de fer aciculaire modifié par le cobalt et procédé pour sa fabrication

(30) Priorität: 20.04.1989 DE 3912976
(43) Veröffentlichungstag der Anmeldung: 24.10.1990
(73) Patentinhaber: BASF Aktiengesellschaft, 67063 Ludwigshafen (DE)
(72) Erfinder: Schwab, Ekkehard, Dr., D-6730 Neustadt (DE); Veitch, Ronald John, Dr., D-6700 Ludwigshafen (DE); Auweter, Helmut, Dr., D-6703 Limburgerhof (DE)

(56) Entgegenhaltungen:
- EP-A- 0 246 501
- IEEE TRANSACTIONS ON MAGNETICS, Band 23, Nr. 1, Januar 1987, Seiten 16-21,IEEE, New York, US; A. EILING: "Co-modified pigments in magnetic recording"

## Beschreibung

Die Erfindung betrifft nadelförmige, kobaltmodifizierte Eisenoxide, bestehend aus einem Kern aus einem Eisenoxid der Formel FeOₓ mit Werten für X von 1,33 bis 1,5 und einer, bezogen auf die Gesamtmenge des Materials, insgesamt 0,4 bis 12 Gew.-% Kobalt- und bis zu 5 Gew.-% Eisen(II)ionen enthaltenden Ferrithülle, welche sich insbesondere hinsichtlich der Koerzitivfeldstärke durch eine verbesserte Alterungsbeständigkeit auszeichnen, sowie ein Verfahren zu ihrer Herstellung.

Kobaltmodifiziertes, nadelförmiges gamma-Eisen(III)oxid wird seit langem und in großem Umfang als magnetisierbares Material bei der Herstellung von magnetischen Aufzeichnungsträgern eingesetzt. Die ursprünglich mit der Kobaltdotierung von Eisen(III)oxid verbundene thermische und mechanische Instabilität von Remanenz und Koerzitivfeldstärke konnte wesentlich verringert werden, nachdem die Dotierung statt in Form einer gleichmäßigen Volumendotierung so vorgenommen wurde, daß sich das Kobalt in Form einer magnetischen Kobaltverbindung in einer äußeren Hülle auf einem im wesentlichen kobaltfreien Kern von Eisen(III)oxid oder bertholliden Eisenoxiden befindet. Für die Herstellung solcher Pigmente mit Schichtaufbau sind mehrere Verfahren beschrieben worden. Im wesentlichen handelt es sich dabei um das Aufbringen einer kobalthaltigen Verbindung auf magnetisches nadelförmiges Eisenoxid und anschließendes Tempern der beschichteten Oxide, wie es beispielsweise in der GB-B 1 441 185 oder der US-A 3 573 980 beschrieben ist. Mit diesen Verfahren können jedoch, wenn die oben beschriebenen Nachteile einer Volumendotierung vermieden werden sollen, nur begrenzte Steigerungen der Koerzitivfeldstärke erzielt werden. Auch das Aufbringen eines Gemisches von Fe(II)- und Co-Hydroxid unter gleichzeitiger Oxidation der Beschichtung ist bekannt (DE-A 22 35 383). Hiermit lassen sich zwar höhere Steigerungen der Koerzitivfeldstärke erzielen, jedoch sind dazu verhältnismäßig große Mengen Kobalt erforderlich, der Nutzungsgrad des Kobalts ist also gering. Des weiteren ist aus den EP-A 14 902 und EP-A 14 903 bekannt, auf das gamma-Eisen(III)oxid ein Gemisch von Fe(II)- und Co-Hydroxid aufzubringen unter gleichzeitigem Einleiten von Inertgas, um die Oxidation des zweiwertigen Eisens zu verhindern. Mit diesem Verfahren lassen sich höhere Steigerungen der Koerzitivfeldstärke bei niedrigerem Kobaltgehalt erzielen. Allerdings werden keine besonders ausgeprägten Kern/Hüllen-Strukturen der so dargestellten Teilchen erreicht, so daß insbesondere bei höherkoerzitiven Pigmenten die im Zusammenhang mit der Volumendotierung geschilderten Nachteile wieder auftreten.

Dies läßt sich darauf zurückführen, daß die für große Koerzitivfeldstärken bei diesem Verfahren erforderlichen hohen Fe(II)-Konzentrationen die Diffusion des Kobalts ins Teilcheninnere stark beschleunigen.

Pigmente mit einem besonders ausgeprägten Kern-Hüllen-Aufbau lassen sich erhalten, wenn nach einem in der US-A 4 770 903 beschriebenen Verfahren gearbeitet wird. Dabei wird das zur Beschichtung eingesetzte gamma-Eisenoxid zunächst unter Inertgas mit Fe(OH)₂ belegt, um eine magnetitähnliche Oberflächenschicht auszubilden, auf die im zweiten Schritt unter oxidierenden Bedingungen bei niedrigen Temperaturen Kobaltferrit aufkristallisiert wird.

Unabhängig vom jeweiligen, mehr oder weniger vorteilhaften Herstellungsverfahren neigen jedoch alle kobaltdotierten Eisenoxide zu Veränderungen, gewöhnlich einer Abnahme der Koerzitivfeldstärke, wenn die Pigmentpulver längere Zeit gelagert werden. Zur Verbesserung dieser Eigenschaft wurde in der JP-A 60 196 905 bereits vorgeschlagen, kobaltmodifizierte Eisenoxide mit Alkyl- bzw. Alkenylsilanen zu belegen. Die genannten Verbindungen sind jedoch in Wasser unlöslich, so daß das zu beschichtende Pigment zunächst getrocknet und dann in organischen Lösungsmitteln erneut dispergiert werden muß. In der DE-A 32 28 021 wird dagegen eine hydrothermale Nachbehandlung zur Verbesserung der Langzeitstabilität von kobaltdotierten Eisenoxiden vorgeschlagen. Dies bedeutet jedoch einen hohen verfahrenstechnischen Aufwand. Schließlich schreibt die DE-A 33 12 243 einer Beschichtung mit Mn-, Zn- oder V-Verbindungen stabilitätsverbessernde Wirkung zu, ohne daß dies jedoch näher spezifiziert wird.

Es bestand daher die Aufgabe, ein langzeitstabiles, kobaltdotiertes Eisenoxid sowie ein einfaches Verfahren zu seiner Herstellung bereitzustellen.

Es wurde nun gefunden, daß nadelförmige, kobaltmodifizierte Eisenoxide, bestehend aus einem Kern aus einem Eisenoxid der Formel FeOₓ mit Werten für X von 1,33 bis 1,5 und einer, bezogen auf die Gesamtmenge des Materials, insgesamt 0,4 bis 12 Gew.-% Kobalt- und bis zu 5 Gew.-% Eisen(II)ionen enthaltenen Ferrithülle, die einen isoelektrischen Punkt von pH ≦ 6,5 aufweisen, eine Abnahme der Koerzitivfeldstärke nach 21 Tagen Lagerung an Luft bei 50°C von weniger als 5 % zeigen, die gestellte Aufgabe erfüllen.

Die Herstellung dieser erfindungsgemäßen Materialien geschieht in besonders vorteilhafter Weise dadurch, daß nadelförmige, kobaltmodifizierte Eisenoxide, bestehend aus einem Kern aus einem Eisenoxid der Formel FeOₓ mit Werten für X von 1,33 bis 1,5 und einer, bezogen auf die Gesamtmenge des Materials, insgesamt 0,4 bis 12 Gew.-% Kobalt- und bis zu 5 Gew.-% Eisen(II)ionen enthaltenden Ferrithülle, in Wasser dispergiert, danach die Suspension unter kräftigem Rühren mit einer verdünnten Lösung eines Alkalisilikats, die bis zu 1 Gew.% Silicium, bezogen auf das zu behandelnde Eisenoxid, enthält, versetzt und das resultierende Material abfiltriert, mit Wasser gewaschen und in Inertgasatmosphere getrocknet wird.

Das in dieses erfindungsgemäße Verfahren eingesetzte, eine Ferrithülle aufweisende Eisenoxid wird zweckmäßigerweise dadurch gewonnen, daß nadelförmiges Eisenoxid der Formel FeOₓ mit Werten für X von 1,33 bis 1,5 in Wasser suspendiert, die Suspension mit einer Eisen(II)salzlösung versetzt und unter Inertgasatmosphäre bei Temperaturen zwischen 5 und 60°C durch Zugabe von Alkalien ein Eisen(II)hydroxidniederschlag in einer Menge von 2 bis 6 Gew.% Eisenionen, bezogen auf das eingesetzte Eisenoxid, auf diesem abgeschieden wird. Zu dieser Suspension wird dann eine Eisen(II)- und Kobaltionen enthaltende Lösung zugegeben und die entsprechenden Hydroxide mittels Alkalien bei 5 bis 60°C unter Inertgas auf das in der Suspension befindliche Material aufgefällt. Anschließend wird durch Einleiten von Luft der Niederschlag bei 5 bis 35°C oxidiert und schließlich durch Erhitzen der Suspension auf 35 bis 95°C in Inertgasatmosphäre die ferritische Hülle gebildet. Das resultierende Endprodukt läßt sich abtrennen, jedoch läßt sich das erfindungsgemäße Verfahren auch unmittelbar in der resultierenden Suspension durchführen.

Zur Prüfung ihrer Langzeitstabilität werden die nachbehandelten trockenen erfindungsgemäßen Eisenoxidpulver bei 50°C an der Luft einem beschleunigten Alterungstest unterworfen. Von Zeit zu Zeit werden aus diesen Pulvern Proben entnommen, deren magnetische Eigenschaften mit einem Schwingmagnetometer ermittelt werden. Die Messung erfolgt bei einer Feldstärke von 380 kA/m, wobei die Koerzitivfeldstärke Hc in [kA/m], umgerechnet auf eine Stopfdichte von ρ = 1,2 g/cm³ angegeben ist. Außerdem wurde die spezifische Oberfläche S_{N2} gemäß DIN 66 132 mittels eines Ströhlein-Areameters der Fa. Ströhlein Düsseldorf, BRD, nach dem Einpunkt-Differenz-Verfahren nach Haul und Dümbgen bestimmt.

Die Bestimmung des isoelektrischen Punktes der erfindungsgemäßen Eisenoxidpulver erfolgt mit einem Automated Electrokinetics Analyzer (Modell 3000, der Fa. PEN KEM, Bedford Hills N.Y, USA). Dazu werden die Pulver in Wasser in einer Konzentration von 0,1 g/l mittels Ultraschall dispergiert. Die Einstellung des pH-Wertes erfolgt mit HCl bzw. NaOH in einem Bereich von typischerweise pH 2 bis pH 12. Die vom Automated Electrokinetics Analyzer gemessene elektrophoretische Beweglichkeit liegt bei den kobaltmodifizierten Eisenoxiden im Bereich zwischen ca. +4 und -4 (»m/sec)/(V/cm).

Der pH-Wert, bei dem die elektrophoretische Beweglichkeit den Wert null annimmt, ist der isoelektrische Punkt.

Nachfolgend wird die Erfindung beispielhaft erläutert, ohne sie jedoch dadurch einzuschränken.

### Beispiel 1

5 kg gamma-Fe₂O₃ (S_{N2} = 40,8 m²/g, Hc = 26,2 kA/m) wurden in 40 l Wasser eindispergiert. Die Dispersion wurde mit 4 l konz. NaOH auf einen pH-Wert von > 12 gestellt, anschließend wurde unter Einleiten von Stickstoff auf 50°C aufgeheizt. Bei dieser Temperatur wurden 995,5 g FeSO₄·7H₂O, gelöst in 12 l Wasser unter weiterem Durchleiten von Stickstoff zudosiert. Unter N₂-Abdeckung wurde der Ansatz 1 Stunde bei dieser Temperatur gehalten.

Anschließend wurde auf 35°C abgekühlt und 1191 g FeSO₄·7 H₂O sowie 906,8 g CoSO₄·7H₂O zugegeben. Unter weiterem Kühlen bis auf Raumtemperatur wurde auf Luftbegasung umgestellt und insgesamt 3 Stunden oxidiert. Danach wurde noch eine Stunde unter Stickstoff bei Raumtemperatur nachgerührt und dann die Dispersion über eine Kammermembranfilterpresse filtriert und mit 60°C warmem Wasser gewaschen.

127 g dieses ca. 50 Gew.-% Restfeuchte enthaltenden Filterkuchens wurden in 500 ml Wasser redispergiert und anschließend 5,25 g Wasserglas mit einem SiO₂-Gehalt von 26,5 Gew.-%, gelöst in 50 ml Wasser, zugegeben. Die erhaltene Dispersion wurde 15 Minuten nachgerührt, dann wurde der Feststoff abfiltriert und unter Stickstoff getrocknet.

Das erhaltene Pulver ist durch folgende Daten charakterisiert:
H_{c}: 53,3 kA/m;
S_{N2}: 38,0 m2/g.

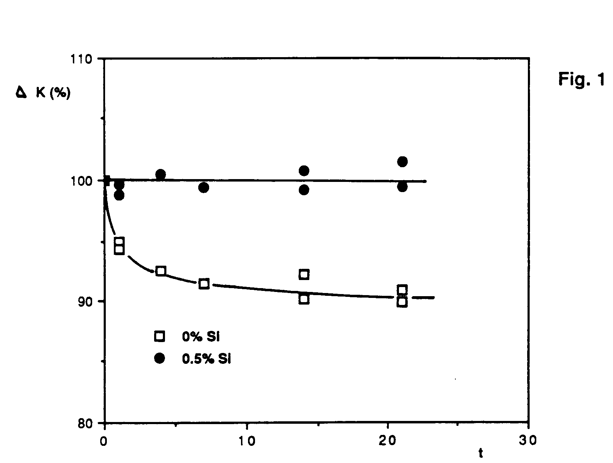

Der in Wasser bestimmte isoelektrische Punkt des Materials liegt bei pH = 6,3. Das Alterungsverhalten des Materials bei Lagerung an Luft und einer Temperatur von 50°C ist in Figur 1 dargestellt, bei der der Abfall der Koerzitivfeldstärke H_{c} in Prozent vom Anfangswert Δ K [%] über die Zeit t in Tagen aufgetragen ist (Meßpunkte "0,5 % Si"). Figur 1 zeigt die Ergebnisse von zwei unabhängigen Meßreihen.

### Vergleichsversuch 1

Es wurde wie in Beispiel 1 beschrieben verfahren, jedoch wurde der feuchte Filterkuchen ohne eine zusätzliche Behandlung mit wasserlöslichen Silikaten direkt unter Stickstoff getrocknet.

Das dabei erhaltene Pulver ist durch folgende Daten gekennzeichnet:
Hc: 54,8 kA/m;
S_{N2}: 37,9 m²/g.

Der in Wasser bestimmte isoelektrische Punkt des Pigments liegt bei pH = 9,2. Das Alterungsverhalten bei Lagerung an Luft und einer Temperatur von 50°C ist in Figur 1 dargestellt (Meßpunkte "0 % Si"). Figur 1 zeigt die Ergebnisse von zwei unabhängigen Meßreihen.

### Beispiel 2

65 g eines bertholliden gamma-Fe₂O₃ mit einem Fe2+-Gehalt von 11,0 Gew.-% wurden 250 ml Wasser dispergiert. Die erhaltene Suspension wurde mit 152 ml konz. NaOH auf pH > 12 gestellt und unter Durchleiten von Stickstoff auf 50°C aufgeheizt. Bei dieser Temperatur wurden 12,94 g FeSO₄·7H₂O, gelöst in 30 ml Wasser, zugesetzt und 1 Stunde bei 50°C nachgerührt. Anschließend wurde abgekühlt und bei Erreichen von 35°C 16,18 g FeSO₄·7H₂O, gelöst in 50 ml Wasser sowie 12,41 g CoSO₄·7H₂O, gelöst in 30 ml Wasser, zugegeben. Unter weiterem Abkühlen wurde auf Luftbegasung umgestellt und 3 Stunden oxidiert. Die Suspension wurde abschließend unter Stickstoffabdeckung für 1 Stunde auf 80°C erhitzt, danach filtriert und neutral gewaschen.

Der erhaltene Filterkuchen wurde geteilt. Eine Hälfte davon wurde in 400 ml Wasser redispergiert und mit 3,06 g Wasserglaslösung (SiO₂-Gehalt 26,5 %) in 50 ml Wasser versetzt, 15 Minuten nachgerührt, abfiltriert und gewaschen. Das erhaltene Produkt wurde unter Stickstoff getrocknet.

Das erhaltene Pulver ist durch folgende Daten charakterisiert:
Hc: 54,7 kA/m;
SN₂: 27,4 m2/g.

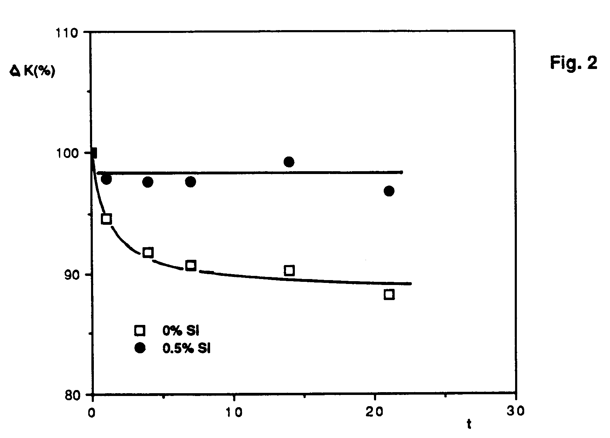

Der in Wasser bestimmte isoelektrische Punkt des Materials liegt bei pH = 5,5. Das Alterungsverhalten bei Lagerung an Luft und einer Temperatur von 50°C ist in Figur 2 dargestellt (Meßpunkte "0,5 % Si").

### Vergleichsversuch 2

Die zweite Hälfte des in Beispiel 2 erhaltenen Pulvers wurde ohne zusätzliche Behandlung mit wasserlöslichen Silikaten direkt unter Stickstoff getrocknet.

Das dabei erhaltene Pulver ist durch folgende Daten gekennzeichnet:
Hc: 54,8 kA/m;
SN₂: 30,4 m2/g.

Der in Wasser bestimmte isoelektrische Punkt des Materials liegt bei pH = 9,5. Das Alterungsverhalten bei Lagerung an Luft und einer Temperatur von 50°C ist in Figur 2 dargestellt (Meßpunkte "0 % Si").

### Vergleichsversuch 3

Gemäß dem in der DE-A-33 12 243 angegebenen Verfahren wurde die Auswirkung von Mn-und Zn-Beschichtungen auf den isoelektrischen Punkt der Pigmente und die Stabilität ihrer magnetischen Eigenschaften untersucht.

Hierzu wurden 75 g des in Beispiel 1 verwendeten gamma-Fe₂O₃ in 350 ml Wasser dispergiert, mit 50 ml konz. NaOH auf pH > 12 gestellt und unter Durchleiten von Stickstoff auf 50°C aufgeheizt. Bei dieser Temperatur wurden 14,93 g FeSO₄·7H₂O, gelöst in 35 ml Wasser, zugesetzt und 1 Stunde bei 50°C nachgerührt. Anschließend wurde abgekühlt und bei Erreichen von 35°C 18,67 g FeSO₄·7H₂O, gelöst in 50 ml Wasser sowie 14,32 g CoSO₄·7H₂O, gelöst in 30 ml Wasser, zugegeben. Unter weiterem Abkühlen wurde auf Luftbegasung umgestellt und 3 Stunden oxidiert.

Anschließend werden bei 40°C unter Stickstoffabdeckung 0,46 g MnSO₄·H₂O, gelöst in 50 ml Wasser zugegeben und 1 Stunde bei 40°C unter weiterer Stickstoffabdeckung nachgerührt. Das Produkt wurde abfiltriert, neutral gewaschen und unter Stickstoff getrocknet.

In gleicher Weise wurden auch Proben mit anderen Mangangehalten sowie Proben mit verschiedenen Zn-Gehalten hergestellt. Die für die Beschichtung eingesetzten Stoffmengen sowie charakteristische Pulvereigenschaften der erhaltenen Pigmente sind in der Tabelle angegeben.

**Tabelle**

| | beschichtet mit | H_{c} | JEP | S_{N2} |
|---|---|---|---|---|
| Vergl. Vers. 3-1 | 0,46 g MnSO₄·H₂O | 48,2 | - | 36,0 |
| Vergl. Vers. 3-2 | 2,31 g MnSO₄·H₂O | 50,5 | 7,3 | 33,5 |
| Vergl. Vers. 3-3 | 4,62 g MnSO₄·H₂O | 50,0 | - | 36,4 |
| Vergl. Vers. 3-4 | 0,66 g ZnSO₄·7H₂O | 49,1 | 8,5 | 37,4 |
| Vergl. Vers. 3-5 | 3,30 g ZnSO₄·7H₂O | 47,9 | - | 35,0 |
| Vergl. Vers. 3-6 | ohne Beschichtung | 49,3 | - | 36,3 |

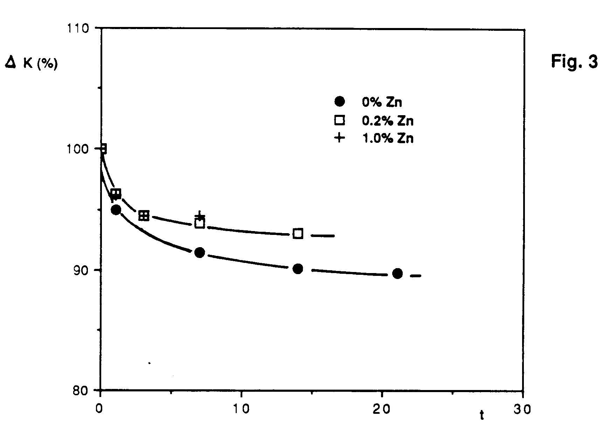

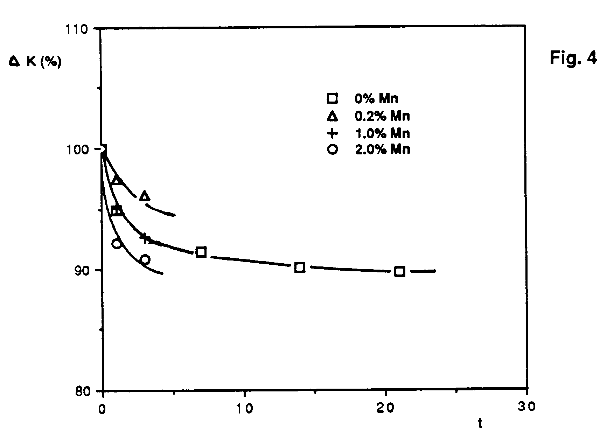

Das Alterungsverhalten der entsprechenden Materialien bei Lagerung an Luft und einer Temperatur von 50°C ist in den Figuren 3 und 4 dargestellt.

## Patentansprüche

1. Nadelförmige, kobaltmodifizierte Eisenoxide, bestehend aus einem Kern aus einem Eisenoxid der Formel FeOₓ mit Werten für X von 1,33 bis 1,5 und einer, bezogen auf die Gesamtmenge des Materials, insgesamt 0,4 bis 12 Gew.-% Kobalt- und bis zu 5 Gew.-% Eisen(II)ionen enthaltenden Ferrithülle, dadurch gekennzeichnet, daß diese Eisenoxide einen isoelektrischen Punkt von pH ≦ 6,5 aufweisen, wodurch die Koerzitivfeldstärke nach 21 Tagen Lagerung an Luft bei 50°C weniger als 5 % abnimmt.

2. Verfahren zur Herstellung der nadelförmigen, kobaltmodifizierten Eisenoxide gemäß Anspruch 1, dadurch gekennzeichnet, daß nadelförmige, kobaltmodifizierte Eisenoxide, bestehend aus einem Kern aus einem Eisenoxid der Formel FeOₓ mit Werten für X von 1,33 bis 1,5 und einer, bezogen auf die Gesamtmenge des Materials, insgesamt 0,4 bis 12 Gew.-% Kobalt- und bis zu 5 Gew.-% Eisen(II)ionen enthaltenden Ferrithülle, in Wasser dispergiert, danach die Suspension unter kräftigem Rühren mit einer verdünnten Lösung eines Alkalisilikats, die bis zu 1 Gew.% Silicium, bezogen auf das zu behandelnde Eisenoxid, enthält, versetzt und das resultierende Material abfiltriert, mit Wasser gewaschen und in Inertgasatmosphäre getrocknet wird.

## Claims

1. An acicular, cobalt-modified iron oxide, consisting of a core comprising an iron oxide of the formula FeOₓ, where x is from 1.33 to 1.5, and a ferrite shell containing in total from 0.4 to 12% by weight of cobalt ions and up to 5% by weight of iron(II) ions, the percentages being based on the total amount of the material, wherein this iron oxide has an isoelectric point of pH ≦ 6.5, with the result that the coercive force decreases by less than 5% after storage for 21 days in air at 50°C.

2. A process for the preparation of an acicular, cobalt-modified iron oxide as claimed in claim 1, wherein the acicular, cobalt-modified iron oxide, consisting of a core comprising an iron oxide of the formula FeOₓ, where x is from 1.33 to 1.5, and a ferrite shell containing in total from 0.4 to 12% by weight of cobalt ions and up to 5% by weight of iron(II) ions, the percentages being based on the total amount of the material, is dispersed in water, a dilute solution of an alkali metal silicate which contains up to 1% by weight, based on the iron oxide to be treated, of silicon is then added to the suspension with vigorous stirring, and the resulting material is filtered off, washed with water and dried in an inert gas atmosphere.

## Revendications

1. Oxyde de fer aciculaire, modifié par du cobalt, constitué d'un noyau en oxyde de fer de formule FeOₓ, à valeur de x de 1,33 à 1,5 et d'une enveloppe de ferrite contenant, rapportés à la quantité totale du matériau, au total 0,4 à 12 % en poids d'ions cobalt et jusqu'à 5 % en poids d'ions fer III, caractérisé par le fait que cet oxyde de fer présente un point isoélectrique du pH ≦ 6,5, par quoi l'intensité du champ coercitif, après stockage de 21 jours, à l'air, à 50°C diminue de moins de 5 %.

2. Procédé de fabrication de l'oxyde de fer aciculaire, modifié par du cobalt selon la revendication 1, caractérisé par le fait que l'oxyde de fer aciculaire, modifié par du cobalt constitué d'un noyau en oxyde de fer de formule FeOₓ, à valeur de x de 1,33 à 1,5 et d'une enveloppe de ferrite contenant, rapportés à la quantité totale du matériau, au total 0,4 à 12 % en poids d'ions cobalt et jusqu'à 5 % en poids d'ions fer III, est dispersé dans de l'eau, puis la suspension est additionnée, sous agitation vigoureuse, d'une solution diluée d'un silicate alcalin, qui contient jusqu'à 1 % en poids de silicium, rapporté à l'oxyde de fer à traiter, et le matériau résultant est séparé par filtrage lavé avec de l'eau et séché en atmosphère de gaz inerte.
